# EUROPÄISCHE PATENTSCHRIFT

(11) **EP 2 138 080 B1**
(45) Veröffentlichungstag und Bekanntmachung des Hinweises auf die Patenterteilung: **13.04.2011**
(21) Anmeldenummer: 08011538.9
(22) Anmeldetag: 25.06.2008
(51) Int. Cl.: A47J 36/24

(54) **Elektrisches Wärmgerät zum Erwärmen von Babykost mittels elektromagnetischer Strahlung**
Electric heating device for heating baby food with electromagnetic radiation
Appareil de chauffage électrique destiné à réchauffer des aliments pour bébé à l'aide d'un rayonnement électromagnétique

(43) Veröffentlichungstag der Anmeldung: 30.12.2009
(73) Patentinhaber: DBK David + Baader GmbH, 76870 Kandel/Pfalz (DE)
(72) Erfinder: Obst, Andreas, 76870 Kandel/Pfalz (DE); Lübke, Catharina, 76872 Winden/ Pfalz (DE)
(74) Vertreter: Polte, Willi

(56) Entgegenhaltungen:
- WO-A-2004/054414
- DE-A1- 2 935 940
- DE-C- 704 788
- DE-C1- 3 941 331
- DE-U1- 20 107 564
- US-A- 3 152 245

## Beschreibung

Die vorliegende Erfindung bezieht sich auf ein elektrisches Wärmgerät mit einem Gehäuse, in dem ein Behälter mit einer zu erwärmenden Substanz, vorzugsweise Babykost, wenigstens teilweise aufnehmbar ist.

Derzeit weit verbreitete Babykostwärmer nutzen als Wärmequelle elektrische Energie, welche auf ein Zwischenmedium übertragen und an einen Behälter abgegeben wird, der das zu erwärmende Medium enthält. Seit langem ist als Zwischenmedium Wasser bekannt, das erwärmt wird und seine Wärme ohne Übergang in die Dampfphase an den Behälter mit dem zu erwärmenden Medium weitergibt. Ein Beispiel für einen solchen Babykostwärmer ist in der EP 06 96 429 B1 gezeigt. Solche Babykostwärmer haben aber den Nachteil, dass die Aufwärmzeit vergleichsweise lang ist, dass große Mengen Wasser bereitgestellt werden müssen und die Flasche nach Beendigen des Heizvorganges nass ist. Der Hauptnachteil dieser Anordnung besteht aber darin, dass die Flasche unmittelbar nachdem die optimale Temperatur des zu beheizenden Mediums erreicht ist, entnommen werden muss, da ansonsten eine Überheizung durch das vergleichsweise hochtemperierte Zwischenmedium auftritt. Dies ist insbesondere bei Anordnungen nachteilig, bei denen mehrere Behälter gleichzeitig erwärmt werden sollen, wie dies beispielsweise in einer Klinik der Fall ist.

Babykostwärmer mit einer so genannten Randfüllung werden mit ca. 150 ml Wasser befüllt und es wird in diese Füllung eine Babysaugflasche mit Babynahrung oder ein Glasbehälter mit einem Fertiggericht getaucht. Die Randfüllung steht im direkten Kontakt mit einem elektrisch beheizten Element, z. B. einem Heizwiderstand oder einem PTC-Heizelement, und dient als Wärmeübertragungsmedium zu der Flasche und der darin befindlichen Nahrung. Es wird also zunächst die Randfüllung beheizt, welche ihrerseits den Behälter mit der Babynahrung erwärmt. Mit Hilfe eines Thermostats oder über eine Zeitschaltvorrichtung wird das Heizelement abgeschaltet, sobald die Randfüllung eine bestimmte einstellbare Temperatur erreicht hat. Weil aber für eine schnelle Aufheizung der Nahrung die Temperatur der Randfüllung in der Regel höher ist, als die gewünschte Temperatur der Babykost, erfolgt selbst nach dem Abschalten der Heizenergiezufuhr ein weiterer Temperaturanstieg der Nahrung, sofern die Flasche im Babykostwärmer belassen wird. Daher tritt bei solchen herkömmlichen Babykostwärmern das Problem auf, dass, wenn eine sehr schnelle Aufheizung gewünscht ist, eine sehr hohe Temperatur der Randfüllung eingestellt werden muss und der Erwärmungsvorgang durch Entnehmen des Nahrungsbehälters abgebrochen werden muss, wenn die Temperatur des Wasserbades einen bestimmten Wert erreicht hat. Eine vollautomatisierte und schnelle Erwärmung von Babykost ist mit diesen herkömmlichen Babykostwärmern schwierig.

Darüber hinaus besteht bei Verwendung einer Randfüllung das Problem, dass durch den Umweg über das Wärmeübertragungsmedium vergleichsweise viel Energie verloren geht.

Eine im Vergleich zu dieser Erwärmung im Wasserbad raschere und besser definierte Erwärmung der Nahrung in einem Behälter kann dadurch erreicht werden, dass der Babykostwärmer nicht mit einer Randfüllung im herkömmlichen Sinne, d.h. einer Wassermenge, die bei eingestelltem Behälter bis an den Rand des Bechers reicht, befüllt wird, sondern nur eine sehr geringe Wassermenge eingebracht wird, so dass das Wasser bei Zufuhr von elektrischer Heizleistung zu sieden beginnt.

Der auf diese Weise erzeugte Wasserdampf dient hier als Wärmeübertragungsmedium, umgibt den Babynahrungsbehälter und erwärmt auf diese Weise die darin befindliche Nahrung. Ein Beispiel für eine solche Anordnung ist aus der EP 1 350 455 bekannt. Aufgrund der hohen Temperatur und Verdampfungsenthalpie des Wasserdampfes erfolgt das Erwärmen der Nahrung mit diesem Wärmegerät sehr schnell. Durch Kondensation an den Begrenzungen der geschlossenen Kammer, also den Becherwänden, dem Behälter und einer eventuellen Abdeckung, wird das Wasser einer erneuten Heizung und Verdampfung zugeführt. Nach Unterbrechen der Heizleistungszufuhr kühlt die geringe verdampfte Wassermenge rasch unter den Siedepunkt ab und es erfolgt keine weitere Wärmeübertragung an den Nahrungsbehälter mehr. Also kann eine Überhitzung der zu erwärmenden Kost vermieden werden.

Der Nachteil dieser Anordnung besteht darin, dass auch bei diesem Gerät zum Betrieb Wasser benötigt wird und die Flasche nach Entnahme nass ist. Darüber hinaus geht wiederum durch den Umweg über ein Wärmeübertragungsmedium, hier Wasserdampf, vergleichsweise viel Energie verloren.

Möchte man daher auf die Verwendung eines Wärmeübertragungsmediums verzichten, besteht alternativ die Möglichkeit auf eine Erwärmung mittels Mikrowellenenergie zurückzugreifen, indem die Flasche in einem herkömmlichen Mikrowellenofen platziert wird. Problematisch ist dabei aber einerseits, die richtige Temperatur einzustellen, und andererseits, dass ein vergleichsweise großes und teures Gerät bereitgestellt werden muss, das im Gegensatz zu den wasserbasierten Babykostwärmern nicht portabel ist.

Aus der US-Patentschrift 3,152,245 ist weiterhin ein Babykostwärmer bekannt, der anstelle von Wasserdampf oder Wasser eine Infrarotlampe verwendet. Dabei ist diese Infrarotlampe mit einem internen Reflektor ausgestattet, so dass der Nachteil dieser Anordnung zum einen darin zu sehen ist, dass als Infrarotstrahlungsquelle nur die vergleichsweise teuren Lampen mit integriertem Reflektor verwendet werden können. Zum anderen wird die Anordnung vergleichsweise unhandlich, da ein kegelstumpfförmiger Reflektor, der als Abdeckung über der Flasche angeordnet ist, als zusätzliches loses Bauteil vorhanden ist.

Die Aufgabe, die der vorliegenden Erfindung zugrunde liegt, besteht darin, ein elektrisches Wärmgerät zum Erwärmen von in einem Behälter befindlicher Substanzen anzugeben, der ohne zusätzliches Wärmeübertragungsmedium wie Wasser oder Dampf auskommt, einfach und kostengünstig herstellbar ist und in portabler Bauweise eine rasche und sichere Aufheizung vorzugsweise von Babykost bietet.

Diese Aufgabe wird durch den Gegenstand der unabhängigen Patentansprüche gelöst. Vorteilhafte Weiterbildungen der vorliegenden Erfindung sind Gegenstand der abhängigen Patentansprüche.

Dabei nutzt die vorliegende Erfindung unter anderem die Erkenntnis, dass ein Durchstrahlen des zu erwärmenden Mediums entlang der gesamten Länge des Behälters nicht erforderlich ist, da sich lokal erzeugte Wärme durch die induzierte Konvektion in dem flüssigen Medium mit ausreichender Geschwindigkeit verteilt. Es genügt daher, die Strahlung nur in einen begrenzten Bereich des Behälters zu lenken, so dass die Anordnung wesentlich platzsparender und kompakter aufgebaut werden kann.

Gegenüber der Anordnung, die aus der US 3,152,245 bekannt ist, bietet die erfindungsgemäße Lösung, welche einen in dem Gehäuse des Geräts integrierten Reflektor vorsieht, den Vorteil, dass kostengünstigere Strahlungsquellen verwendet werden können und dass die Geometrie der Anordnung verkleinert wird. Weiterhin erhöht sich die Energieausnutzung, so dass mit wesentlich weniger elektrischer Energie raschere Aufheizzeiten erreicht werden können.

Die erfindungsgemäße Reflektoranordnung lässt sich insbesondere mit herkömmlichen Glühlampen, Halogenlampen, aber auch mit Infrarotwärmelampen in verschiedenen Formen, Rohrheizkörpem oder Licht emittierenden Dioden (LED), welche ein geeignetes Wärmespektrum emittieren, verwenden.

Gemäß einer vorteilhaften Ausführungsform der vorliegenden Erfindung weist der Reflektor eine Vielzahl voneinander getrennter Reflektorelemente auf. Dabei kann der Reflektor entweder quer zu seiner Längsrichtung in Halbschalen geteilt sein, oder aber in einzelne Reflektorschilde, die zusammengenommen den Reflektor ausbilden, unterteilt sein. Weiterhin können Reflektorelemente mit unterschiedlichen wirksamen Querschnitten eingesetzt werden, um die Wärmestrahlung in einem bestimmten Bereich des zu erwärmenden Mediums besonders effektiv zu bündeln.

Alternativ kann der Reflektor auch einstückig als rotationssymmetrischer Hohlkörper hergestellt sein.

Zum Einsetzen und Halten des Behälters während des Aufheizvorganges kann das elektrische Wärmgerät gemäß einer vorteilhaften Ausführungsform eine Halterung zum Halten des Behälters in einer definierten Position mit Bezug auf die Strahlungsquelle umfassen.

Diese Halterung kann beispielsweise aus federndem gebogenem Draht hergestellt werden, der den Vorteil bietet, dass er kostengünstig, aber dennoch ausreichend temperaturbeständig ist.

Um sicherzustellen, dass ein Betrieb ohne eingestellte Flasche verhindert wird und damit eine Überhitzung sicher ausgeschlossen wird, kann die Aufstellfläche für die Flasche mit einer Vorrichtung versehen sein, die erkennt, wann ein Behälter eingesetzt ist. Dies könnte beispielsweise durch einen Druckschalter oder eine Lichtschranke realisiert werden.

Der Reflektor des erfindungsgemäßen Wärmgerätes sollte eine hochreflektierende Oberfläche besitzen, um möglichst viel Strahlung an die zu erwärmende Substanz zu reflektieren. Als Material für solche Reflektoren kommen Metalle, z. B. Bleche oder Druckgussteile, welche zum Zweck einer verbesserten Reflexion mit entsprechenden Beschichtungen versehen oder aber poliert sind, zum Einsatz. Auch die Verwendung von Kunststoffen oder Glaskörpern, die geeignet reflektierend beschichtet, beispielsweise metallisiert, werden, ist möglich. Wichtig ist dabei, dass der Reflektor den auftretenden Temperaturen standhält.

Gemäß einer vorteilhaften Weiterbildung des elektrischen Wärmegeräts kann dieses auch eine elektronische Steuereinrichtung zum Steuern der Dauer und/oder Intensität der Energiezufuhr durch die Strahlungsquelle aufweisen. Im einfachsten Fall handelt es sich hierbei um eine Timerschaltung, die über die Dauer der Einstrahlung voreingestellt die Erwärmung der Substanz in dem Behälter festlegt.

Auch der Einsatz einer kostengünstigen mechanischen Zeitschaltuhr zur Steuerung des elektrischen Wärmgeräts ist möglich.

Basierend auf der grundsätzlichen Idee, die Infrarotstrahlung lokal in einem begrenzten Bereich der zu erwärmenden Flüssigkeit zu bündeln und die natürliche interne Konvektion zur Verteilung der Wärme zu nutzen, können verschiedene Ausgestaltungen des Wärmgeräts realisiert werden.

Gemäß einer ersten Ausführungsform hat der Reflektor eine rotationseiliptische Querschnittform, wobei die Strahlungsquelle eine im Wesentlichen punktförmige Abstrahlcharakteristik hat und in einem ersten Brennpunkt des Reflektors angeordnet ist. Der Bereich des Behälters, in welchem die Strahlung fokussiert werden soll, befindet sich in einem zweiten Brennpunkt des rotationsellipsoiden Reflektors. Auf diese Weise lässt sich eine besonders effektive Bündelung und Ausnutzung der ausgesendeten Strahlung und damit der benötigen elektrischen Energie erreichen.

Alternativ kann die Strahlungsquelle auch von der annähernd punktförmigen Gestalt abweichen und den Heizraum mindestens zum Teil umgeben oder eine längliche Form haben. Sie kann z. B. wenigstens teilweise ringförmig oder oval ausgestaltet sein und von einem entsprechenden toroiden Reflektorsystem umgeben sein. Ein solcher ringförmiger Strahler kann beispielsweise ein entsprechend geformter IR-Strahler, aber auch eine kreisförmig angeordnete Reihe von LEDs sein.

Ein weiteres Konzept, das durch die lokale Erwärmung der Flüssigkeit mittels elektromagnetischer Strahlung ermöglicht wird, ist ein Wärmgerät, das nicht als Standgerät den zu erwärmenden Behälter aufnimmt, sondern das auf den Behälter so aufgesetzt wird, dass die Strahlung in einem Bereich, in dem sich die zu erwärmende Flüssigkeit befindet, fokussiert wird. Grundsätzlich ist hier ebenfalls die Möglichkeit des ellipsoiden Reflektors gegeben, wobei hier der Behälter teilweise von dem aufzusetzenden Wärmgerät überdeckt werden muss, da der Brennpunkt, in welchem die Aufheizung erfolgt, innerhalb des Reflektors gelegen ist.

Alternativ kann aber auch eine Reflektoranordnung gewählt werden, welche die Strahlung nach außen leitet und außerhalb des Gehäuses bündelt, beispielsweise ein Rotationsparaboloid. In diesem Fall muss das aufzusetzende Wärmegerät nur einen sehr geringen Teil des zu beheizenden Behälters in sich aufnehmen, gerade so viel, um ausreichende mechanische Stabilität zu gewährleisten. Bezüglich der zu verwendenden Materialien gilt bei dieser Lösung dasselbe wie bei der Standgerätanordnung.

Gemäß einer vorteilhaften Weiterbildung kann ein solches von oben in den Behälter einstrahlendes Wärmgerät auch in einer Fixiereinrichtung gehalten sein, um eine verbesserte Standfestigkeit und Betriebssicherheit zu gewährleisten. Im einfachsten Fall ist eine solche Fixiereinrichtung aus einem gebogenen Draht hergestellt. Alternativ kann aber auch eine Art Gehäuse, in welches der Behälter eingestellt werden kann und das z. B. aus Kunststoff hergestellt ist, vorgesehen sein.

Zum besseren Verständnis der vorliegenden Erfindung wird diese anhand der in den nachfolgenden Figuren dargestellten Ausführungsbeispiele näher erläutert. Dabei werden gleiche Teile mit gleichen Bezugszeichen und denselben Bauteilbezeichnungen versehen. Weiterhin können auch Merkmale oder Merkmalskombinationen aus den gezeigten und beschriebenen unterschiedlichen Ausführungsformen für sich genommen eigenständige erfinderische oder erfindungsgemäße Lösungen darstellen. Es zeigen:
- **Fig. 1**: eine geschnittene Darstellung des erfindungsgemäßen elektrischen Wärmgeräts mit einer eingestellten Babyflasche;
- **Fig. 2**: eine Seitenansicht des Wärmgeräts aus Fig. 1;
- **Fig. 3**: eine Schnittdarstellung des Wärmgeräts aus Fig. 1 ohne eingezeichnete Strahlfüh- rung;
- **Fig. 4**: eine Ansicht in Richtung der eingestellten Babyflasche auf das Gerät der Fig. 1;
- **Fig. 5**: eine perspektivische Übersichtsdarstellung des erfindungsgemäßen Wärmgeräts;
- **Fig. 6**: eine Reflektoranordnung und die Bodenplatte eines Wärmgeräts gemäß einer al- ternativen Ausführungsform;
- **Fig. 7**: eine weitere vorteilhafte Ausführungsform eines erfindungsgemäßen elektrischen Wärmgeräts mit eingestellter Flasche in einer Schnittdarstellung;
- **Fig. 8**: eine perspektivische Darstellung der Anordnung der Fig. 7;
- **Fig. 9**: eine weitere vorteilhafte Ausführungsform eines elektrischen Wärmgeräts in Form eines Aufsatzes;
- **Fig. 10**: eine Seitenansicht einer weiteren vorteilhaften Ausführungsform eines elektrischen Wärmgeräts in Form eines Aufsatzes;
- **Fig. 11**: eine um 90° gedrehte Seitenansicht der Anordnung aus Fig. 10;
- **Fig. 12**: eine Draufsicht auf die Anordnung der Fig. 10;
- **Fig. 13**: eine perspektivische Darstellung der Anordnung der Fig. 10;
- **Fig. 14**: eine perspektivische Darstellung der Anordnung der Fig. 10 im betriebsbereiten Zustand mit eingestelltem Behälter;
- **Fig. 15**: eine Seitenansicht einer weiteren vorteilhaften Ausführungsform eines elektrischen Wärmgeräts in Form eines Aufsatzes;
- **Fig. 16**: eine Ansicht von oben auf eine weitere vorteilhafte Ausführungsform eines elektri- schen Wärmgeräts mit eingestellter Flasche;
- **Fig. 17**: eine schematische Seitenansicht der Anordnung aus Fig. 16 mit stabförmiger Strahlungsquelle;
- **Fig. 18**: eine teilweise geöffnete perspektivische Darstellung der Anordnung aus Fig. 17;
- **Fig. 19**: eine teilweise geschnittene Darstellung einer weiteren vorteilhaften Ausführungs- form des elektrischen Wärmegeräts mit eingestellter Flasche;
- **Fig. 20**: eine weitere vorteilhafte Ausführungsform des Wärmgeräts mit eingestellter Fla- sche.

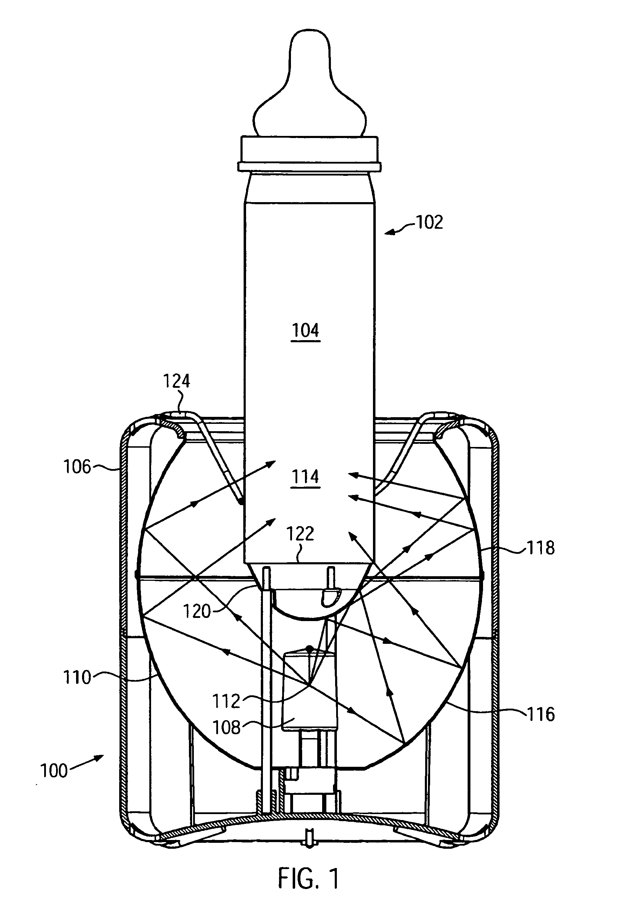

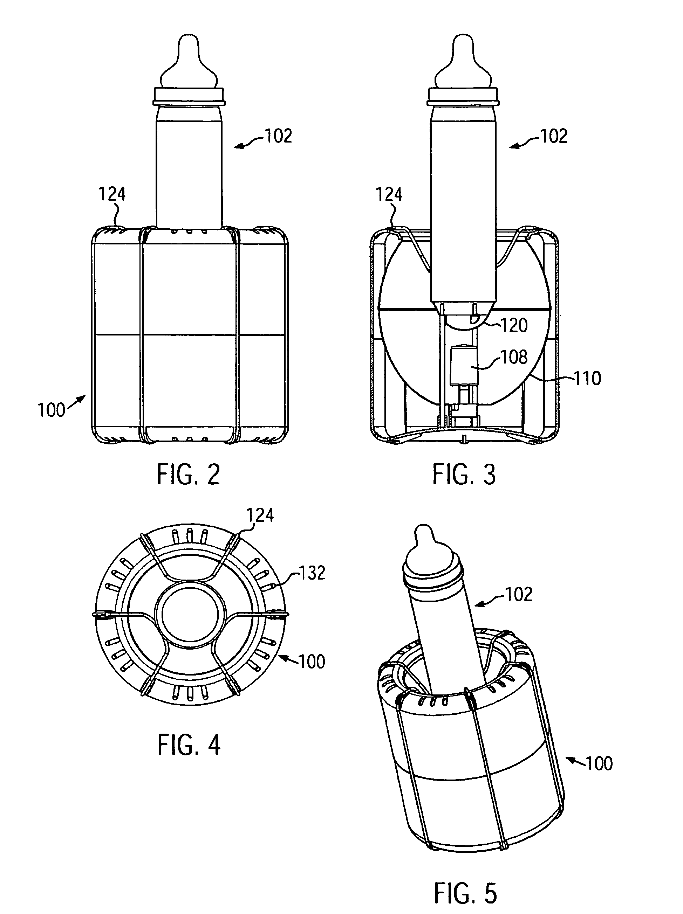

Eine erste Ausführungsform des elektrischen Wärmgeräts 100 soll nachfolgend mit Bezug auf die Fig. 1 bis 5 im Detail beschrieben werden. Dabei wird häufig der Begriff Babykostwärmer verwendet. Es ist für einen Fachmann aber klar, dass die erfindungsgemäße Lösung auch für andere Behälter verwendbar ist, in denen eine Substanz erwärmt werden soll.

Das Wärmgerät 100 ist hier in betriebsbereitem Zustand, d. h. mit einem eingestellten Behälter 102, der die zu beheizende Substanz 104 enthält, gezeigt. Im vorliegenden Fall handelt es sich bei dem Behälter 102 um eine Babysaugflasche und bei dem zu erwärmenden Medium 104 um eine flüssige Säuglingsnahrung.

In einem Gehäuse 106, das beispielsweise aus Kunststoff besteht, ist eine Strahlungsquelle, hier eine Halogenlampe 108 angeordnet und wird mit entsprechender elektrischer Leistung versorgt. Lüftungsschlitze 132 sorgen dafür, dass sich das Gehäuse 106 im Betrieb nicht überhitzt.

Die Leistung der Halogenlampe 108 liegt typischerweise zwischen 250 und 300 Watt und es wird damit eine Aufwärmzeit der Babynahrung 104 erreicht, die ca. 30 % unter der eines bekannten Dampfbabykostwärmers liegt. 200 ml Babynahrung können von Raumtemperatur auf 37 Grad Celsius innerhalb von ca. 2 Minuten erwärmt werden.

Diese effiziente Energieausnutzung wird durch die erfindungsgemäße Anordnung der Reflektoren ermöglicht: Ein erstes Reflektorelement 110 ist so angeordnet, dass sich die Strahlungsquelle 108 in einem ersten Brennpunkt 112 befindet, während die Strahlung in einem zweiten Brennpunkt 114, in welchem sich ein Teil der zu erwärmenden Substanz 104 befindet, fokussiert wird. Durch die Bündelung der Strahlung in dem Bereich 114 erwärmt sich die dort befindliche Babynahrung 104 und es entsteht durch den Temperaturunterschied eine induzierte Konvektion in dem Medium 104.

Dadurch verteilt sich die Wärme gleichmäßig, so dass die gesamte Babynahrung 104 sich auf die gewünschte Temperatur aufheizt. Das erste Reflektorelement 110 hat einen im Wesentlichen rotationselliptischen Querschnitt und besteht bei der gezeigten Anordnung aus einem an der Innenseite hochreflektierenden Metall. Für eine vereinfachte Herstellbarkeit ist der Reflektor 110 zweiteilig gearbeitet und besteht aus einer ersten Halbschale 116 und einer zweiten Halbschale 118, die in einem kreisförmigen Nahtbereich miteinander verbunden sind. Auch andere Materialien für den Reflektor, wie z. B. Kunststoff oder Glas, die geeignet beschichtet werden, sind möglich.

Zusätzlich zu diesem konkaven Reflektorelement 110 ist gemäß der vorliegenden Ausführungsform ein weiteres konvexes Reflektorelement 120 vorgesehen. Das konvexe Reflektorelement 120 ist so angeordnet, dass es die axial auf die Flasche gerichtete Strahlung der Strahlungsquelle 108 zurück auf das erste Reflektorelement 110 wirft, so dass verhindert wird, dass Strahlung direkt nach oben durch die Flasche nach außen entweicht.

Die Aufstellfläche 122 kann außerdem mit einer (in dieser Figur nicht dargestellten) Vorrichtung versehen sein, die erkennt, wann ein Behälter 102 eingesetzt ist, beispielsweise über einen Druckschalter. Eine solche Vorrichtung verhindert einen Betrieb des elektrischen Wärmgeräts 100 ohne Flasche und vermeidet dadurch eine übermäßige Erwärmung des Geräts.

In den Fig. 1 bis 5 sind die Einrichtungen zur Stromleitung und die Steuerschaltung oder Regelung nicht dargestellt. Möglich ist hier eine Zeitsteuerung, eine Steuerung über einen Temperatursensor oder dergleichen mehr.

Kennzeichnend für die Ausführungsform der Fig. 1 bis 5 ist unter anderem die Tatsache, dass die elektromagnetische Strahlung die Oberkante des Gehäuses 106 nicht verlässt. Auf diese Weise kann bei vergleichsweise kompakter Bauform eine hohe Energieeffizienz erreicht werden.

Um die eingestellte Flasche 102 in ihrer Position bezüglich des Punktes, in welchem die Strahlung gebündelt wird, mechanisch zu sichern, umfasst das Wärmgerät 100 weiterhin eine Halterung 124, die aus einem gebogenen Draht hergestellt ist. Die Halterung fixiert den Behälter und kann federnd ausgestaltet werden. Selbstverständlich könnten auch andere Ausführungsformen, z. B. aus Kunststoff oder gestanztem und gebogenem Blech, verwendet werden, vorausgesetzt, dass die Ausgestaltung das Einpassen verschiedener Behälterdurchmesser ermöglicht und das Material ausreichend wärmebeständig ist.

Die in den Fig. 1 bis 5 gezeigte Ausführungsform ist außerdem dadurch charakterisiert, dass die Strahlungsquelle 108 als punktförmig angenommen werden kann. Andere Strahlungsquellen als eine Halogenlampe, wie eine Glühlampe, eine IR-Wärmelampe, ein Rohrheizkörper oder eine lichtemittierende Diode (LED), die ebenfalls eine rundum abstrahlende Charakteristik besitzen, wären ebenfalls verwendbar.

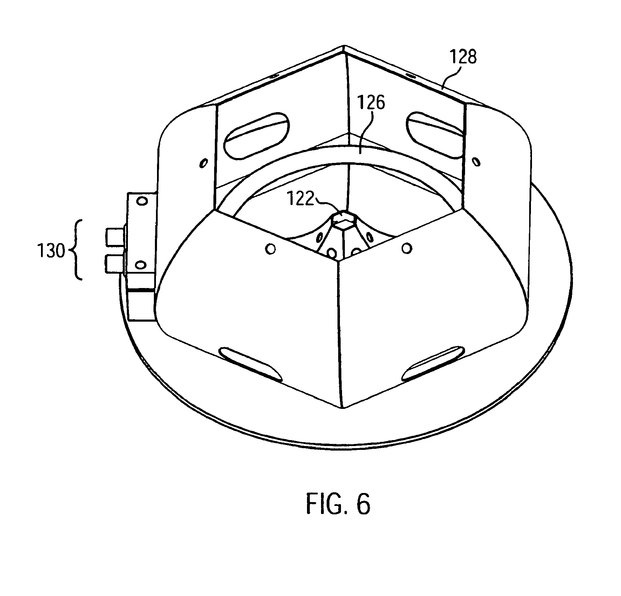

Eine alternative Ausführungsform, bei der die Abstrahlcharakteristik der Lampe nicht punktförmig, sondern annähernd ringförmig ist, soll im Folgenden mit Bezug auf die Fig. 6 bis 8 erläutert werden. Bei dieser Lösung ist ein ringförmiger Infrarotstrahler 126 von einer Vielzahl von Reflektorsegmenten 128 so umgeben, dass die Strahlung wiederum in einem unteren Bereich der eingestellten Flasche fokussiert wird.

Dabei bilden die sechs Reflektorsegmente 128 der Figur 6 gleichzeitig auch die Aufstellfläche 122 für die Flasche 102 aus. Elektrische Anschlüsse 130 versorgen den Strahler 126 mit der benötigten elektrischen Energie.

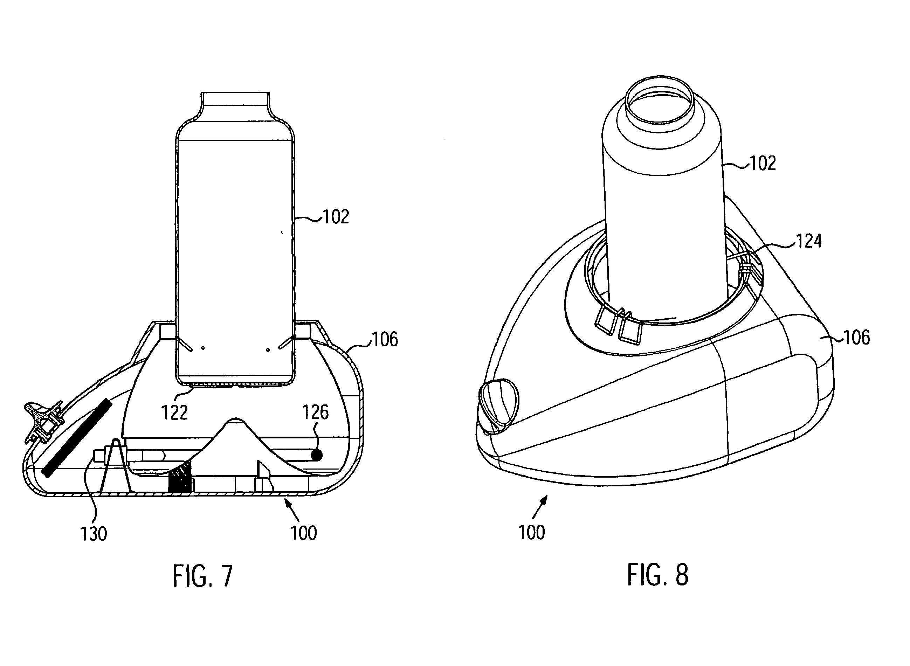

Diese Anordnung lässt sich auch mit einem einstückig hergestellten Reflektor realisieren, wie dies in Fig. 7 und 8 gezeigt ist. Hier wird der Behälter auf eine Aufstellfläche 122 aufgesetzt, die hier nicht näher dargestellt ist und die beispielsweise durch die Halterung 124 gebildet werden kann.

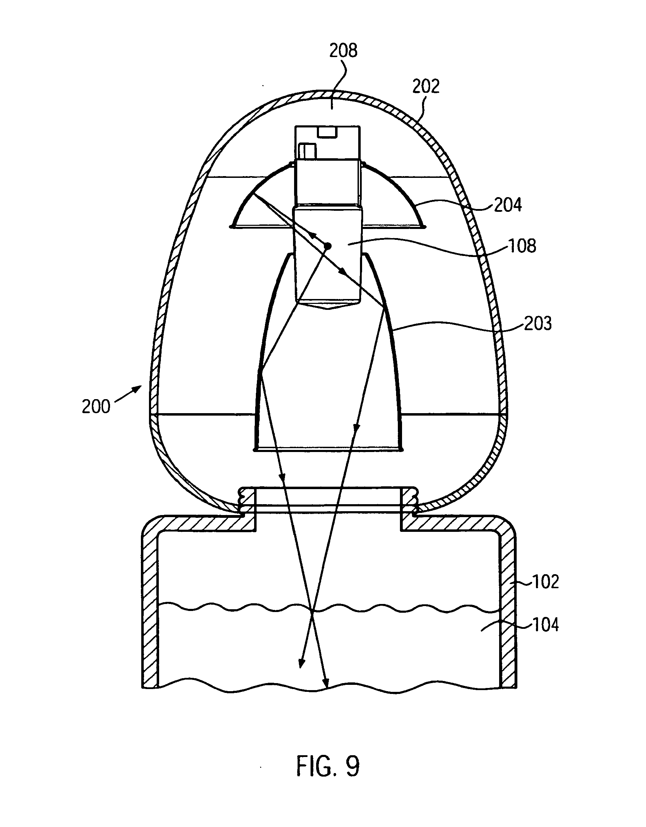

Eine weitere gerätetechnische Lösung, welche sich die erfindungsgemäßen Prinzipien zunutze macht, ist ein elektrischer Wärmaufsatz 200, der wesentlich kleiner sein kann, als das Wärmgerät 100 und vor allem dadurch gekennzeichnet ist, dass die Strahlung in einem Bereich außerhalb des Gehäuses 202 fokussiert ist. Bei der in Fig. 9 gezeigten Ausführungsform muss nur ein sehr geringer Teil des Behälters 102 von dem Gehäuse 202 umschlossen werden, gerade so viel, als für die Erreichung der mechanischen Stabilität erforderlich ist.

Das Wärmgerät 200 wird beispielsweise über eine Verschraubung oder Verrastung auf dem Behälter fixiert. Um eine Strahlenführung zu erreichen, die das Fokussieren der Strahlung außerhalb des Gehäuses 202 ermöglicht, sind in der in Fig. 9 gezeigten Anordnung zwei paraboloide Reflektorelemente 204 und 206 vorgesehen.

Als Strahlungsquelle ist wiederum eine als punktförmig anzunehmende Halogenlampe vorgesehen. In dem Bereich 208 kann der elektrische Kontakt sowie die Regel- und Steuerungsschaltung untergebracht werden. Der Vorteil dieser Ausführungsform liegt in seiner besonders kompakten und deshalb leicht portablen Bauform. Insbesondere zum raschen Aufheizen von Fertigmahlzeiten in einem Gläschen ist der erfindungsgemäße Wärmaufsatz vorteilhaft anwendbar.

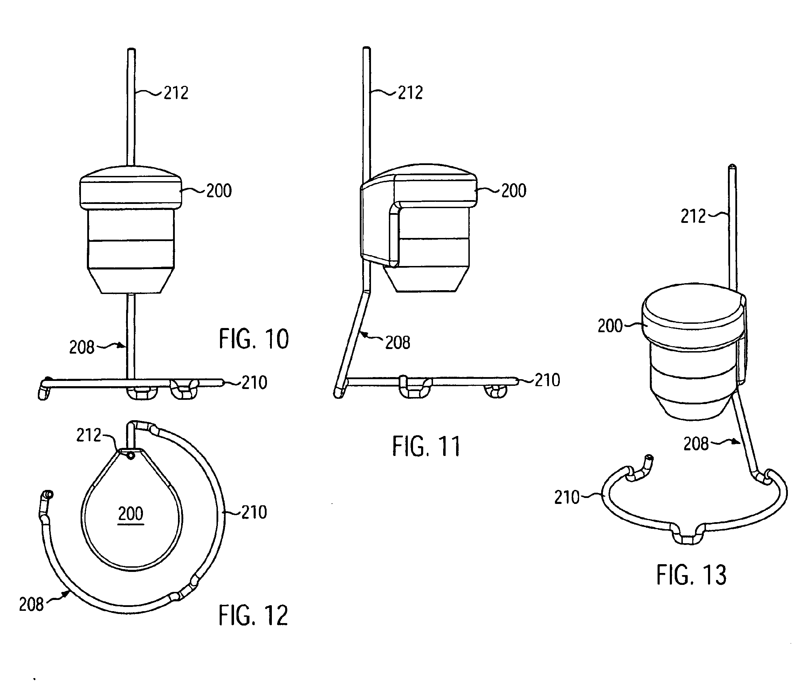

Mit Bezug auf die Figuren 10 bis 14 soll eine vorteilhafte Ausführungsform des von oben in einen Behälter einstrahlenden Wärmgeräts erläutert werden. Dabei ist der Aufsatz 200 an einer Fixiereinrichtung 208 gehalten, die für eine verbesserte Stabilität der gesamten Anordnung im Betrieb sorgt. Die Fixiereinrichtung 208 ist in der einfachsten und kostengünstigsten Variante aus einem festen Stahldraht gebogen und weist eine ringförmige Standfläche 210 sowie ein damit verbundenes stangenförmiges Halteelement 212 auf. Durch eine verschiebliche Befestigung des Aufsatzgeräts 200 an dem Halteelement 212 kann der Aufsatz 200 über dem Behälter höhenverstellbar positioniert werden. Eine solche Höhenverstellung ist zum einen von Vorteil, da einen Anpassung auf verschiedene Flaschenhöhen möglich ist, zum anderen, weil sichergestellt werden kann, dass der Bereich, in welchem die Strahlung gebündelt wird, immer innerhalb der Nahrung liegt. Darüber hinaus kann der Behälter so auf den Aufsatz gedrückt werden, dass ein Entweichen von Licht und Wärme verhindert wird.

Ein weiterer großer Vorteil der Ausführungsformen der Figuren 9 bis 14 kann darin gesehen werden, dass auch besonders gebogene und andere nicht in ein Gehäuse einsetzbare Behälter beheizt werden können.

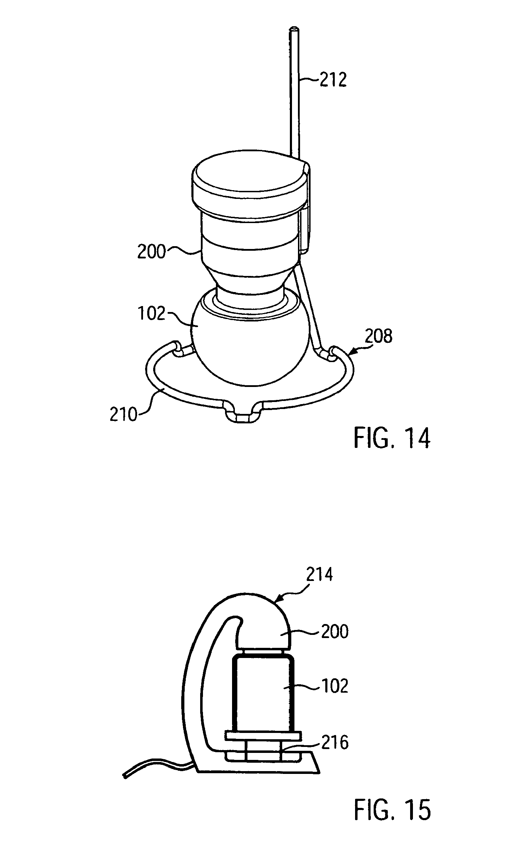

In Figur 15 ist eine weitere Designmöglichkeit für dieses Heizprinzip gezeigt, bei der die Fixiereinrichtung und das Aufsatzgerät 200 als ein integrales Gerät 214 ausgestaltet sind. Die Höhenverstellbarkeit des Behälters 102 kann hier beispielsweise durch eine höhenverstellbare Abstellfläche 216 für den Behälter 102 realisiert werden. Diese Anordnung hat den Vorteil, dass sie stabiler im Betrieb und robuster in der Lagerung ist.

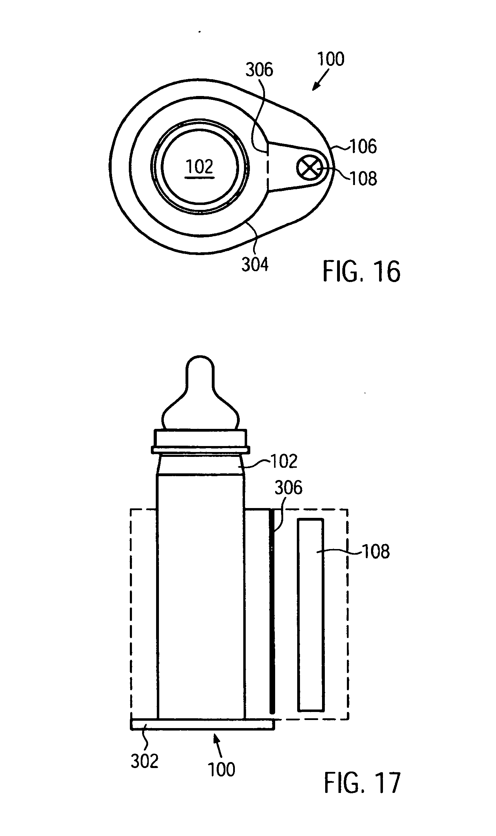

Eine wichtige Problematik bei der Handhabung von elektrischen Babykostwärmern ist die Tatsache, dass im Fall, dass aus der Flasche Nahrung ausläuft, diese den Reflektorbereich verschmutzen kann, und im schlimmsten Fall aufgrund der hohen Temperaturen die Verunreinigungen anbrennen können. Dies ist sowohl ein Hygieneproblem als auch ein Faktor, der die Effizienz der Reflexion reduziert. Darüber hinaus haben die bisher erläuterten Anordnungen den Nachteil, dass das Einstellen der Flasche, bzw. das Platzieren des Heizaufsatzes auf der Flasche mechanisch kritischer ist als bei etablierten Systemen. Im Folgenden soll mit Bezug auf die Fig. 16 bis 20 ein weiteres Konzept erläutert werden, bei dem zum einen das Einstellen der Flasche deutlich erleichtert ist und zum anderen die Herstellung der Reflektoren verbilligt ist. Bei der hier gezeigten Lösung werden keine rotationssymmetrischen oder runden Reflektoren verwendet und der Behälter wird auf einer Bodenplatte 302 abgestellt.

Prinzipiell liegt bei dieser Ausführungsform nur noch ein Hohlraum vor, der mit einer Quelle elektromagnetischer Strahlung und einem Reflektor 304 versehen ist, der die Strahlung geeignet auf den eingesetzten Behälter lenkt.

Optional kann ein Schutzelement 306, beispielsweise eine Glasscheibe oder ein Geflecht, z. B. aus Draht, die Strahlungsquelle 108 vor Verschmutzung schützen. Der umlaufende Reflektor ist, wie dies schematisch in Fig. 16 gezeigt ist, in dem Gehäuse 106 aufgenommen. Er kann, wie bereits oben erwähnt, aus Metall, metallisiertem Kunststoff oder metallisiertem Glas hergestellt sein. Die Strahlungsquelle 108 kann dabei, z. B. wie in Fig. 17 dargestellt, stabförmig ausgestaltet sein und beispielsweise durch einen Rohrheizkörper gebildet werden. Andere der bereits oben erwähnten Möglichkeiten sind selbstverständlich auch bei dieser Ausführungsform einsetzbar.

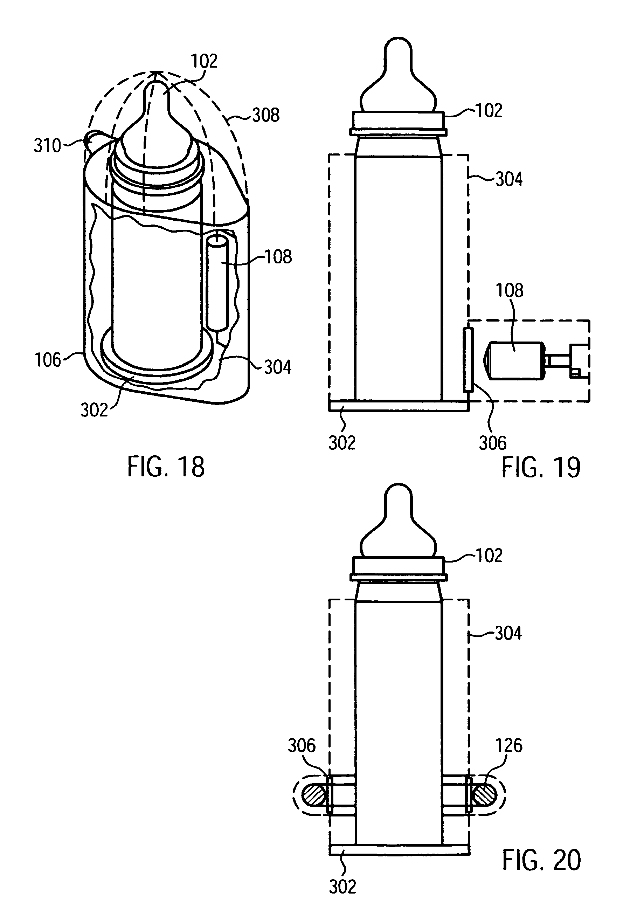

Wie in Fig. 18 angedeutet, kann das Wärmgerät 100 außerdem mit einer Haube 308 und/oder einem Passring 310 versehen sein, um ein Austreten von Wärme und Licht nach außen zu verhindern. Sowohl die Haube 308 wie auch der Passring 310 können an ihrer Innenseite auch verspiegelt sein, um die Strahlung zurückzureflektieren.

In Fig. 19 ist eine Anordnung gezeigt, bei der die Strahlungsquelle 108 eine punktförmige Charakteristik hat, während Fig. 20 eine im Wesentlichen ringförmige Strahlungsquelle 108 zeigt.

Für einen Fachmann ist außerdem klar, dass der Reflektor 304 der Fig. 16 auch durch mehrere reflektierende Elemente gebildet werden kann, die nicht miteinander fest verbunden sind.

## Patentansprüche

1. Elektrisches Wärmgerät mit einem Gehäuse (106), in dem ein Behälter (102) mit einer zu erwärmenden Substanz (104) wenigstens teilweise aufnehmbar ist, wo bei in dem Gehäuse (106) mindestens eine Strahlungsquelle (108) zum Emittieren elektromagnetischer Strahlung angeordnet ist und wobei das Wärmgerät (100) weiterhin mindestens einen Reflektor (110, 120, 128) aufweist, der so angeordnet ist, dass er die emittierte elektromagnetische Strahlung auf die zu erwärmende Substanz lenkt, wobei der Reflektor (110, 120, 128) einen Hohlraum, von dem der Behälter (102) zum Erwärmen zumindest teilweise aufnehmbar ist, ausbildet, und wobei die Strahlungsquelle mit Bezug auf den Reflektor so angeordnet ist, dass ein überwiegender Anteil der elektromagnetischen Strahlung, die nicht unmittelbar auf den Behälter trifft, durch den Reflektor auf den Behälter gelenkt wird, **dadurch gekennzeichnet, dass** der Reflektor derart ausgestaltet ist, dass die elektromagnetische Strahlung auf einen begrenzten Bereich der zu erwärmenden Substanz fokussiert ist.

2. Elektrisches Wärmgerät nach Anspruch 1, wobei sich die Strahlungsquelle (108) innerhalb des Hohlraumes befindet.

3. Elektrisches Wärmgerät nach Anspruch 1 oder 2, wobei die elektromagnetische Strahlung Infrarotstrahlung umfasst.

4. Elektrisches Wärmgerät nach mindestens einem der vorhergehenden Ansprüche, wobei die Strahlungsquelle (108) eine Glühlampe, eine Halogenlampe, eine IR-Wärmelampe, einen Rohrheizkörper oder eine Licht emittierende Diode, LED, aufweist.

5. Elektrisches Wärmgerät nach mindestens einem der vorhergehenden Ansprüche, wobei der Reflektor (110, 120, 128) eine Vielzahl voneinander getrennter Reflektorelemente aufweist.

6. Elektrisches Wärmgerät nach mindestens einem der vorhergehenden Ansprüche, wobei der Reflektor (110, 120, 128) einstückig als rotationssymmetrischer Hohlkörper hergestellt ist.

7. Elektrisches Wärmgerät nach mindestens einem der vorhergehenden Ansprüche, weiterhin umfassend eine Halterung (124) zum Haltern des Behälters in einer definierten Position mit Bezug auf die Strahlungsquelle.

8. Elektrisches Wärmgerät nach mindestens einem der vorhergehenden Ansprüche, weiterhin umfassend eine Sensorvorrichtung zum Detektieren des eingestellten Behälters.

9. Elektrisches Wärmgerät nach mindestens einem der vorhergehenden Ansprüche, wobei der Reflektor (110, 120, 128) aus Metall oder einem metallisierten Kunststoff oder Glas hergestellt ist,

10. Elektrisches Wärmgerät nach mindestens einem der vorhergehenden Ansprüche, weiterhin umfassend eine mechanische oder elektronische Steuereinrichtung zum Steuern der Dauer und/oder Intensität der Energiezufuhr durch die Strahlungsquelle.

11. Elektrisches Wärmgerät nach mindestens einem der vorhergehenden Ansprüche, wobei die Strahlungsquelle (108) im Wesentlichen punktförmig ausgebildet ist und in einem ersten Brennpunkt (112) des Reflektors (110, 120, 128) angeordnet ist, und wobei sich der Behälter mit der zu erwärmenden Substanz im Betrieb in einem zweiten Brennpunkt (114) des Reflektors befindet.

12. Elektrisches Wärmgerät nach Anspruch 11, wobei der Reflektor (110, 120, 128) einen rotationsellipsoiden Querschnitt aufweist.

13. Elektrisches Wärmgerät nach mindestens einem der Ansprüche 1 bis 10, wobei die Strahlungsquelle (108) im Wesentlichen ringförmig ausgebildet ist.

14. Elektrisches Wärmgerät nach mindestens einem der vorhergehenden Ansprüche, wobei der Reflektor einen rotationsparaboloiden Querschnitt aufweist, der mit Bezug auf die Strahlungsquelle so angeordnet ist, dass die elektromagnetische Strahlung auf einen Bereich außerhalb des Gehäuses gebündelt wird.

## Claims

1. An electric heating apparatus comprising a casing (106) in which a receptacle (102) containing a substance (104) to be heated can be at least partly received, wherein at least one radiation source (108) for emitting electromagnetic radiation is arranged in the casing (106) and wherein the heating apparatus (100) further comprises at least one reflector (110, 120, 128) disposed in such way that it directs the emitted electromagnetic radiation to the substance to be heated, wherein the reflector (110, 120, 128) forms a hollow by which the receptacle (102) can be at least partly received for heating, and wherein the radiation source is arranged with respect to the reflector such that a predominant portion of the electromagnetic radiation which is not directly incident on the receptacle is directed to the receptacle by the reflector, **characterized in that** the reflector is configured such that the electromagnetic radiation is focused to a limited area of the substance to be heated.

2. An electric heating apparatus according to claim 1, wherein the radiation source (108) is provided inside the hollow.

3. An electric heating apparatus according to claim 1 or 2, wherein the electromagnetic radiation includes infrared radiation.

4. An electric heating apparatus according to at least one of the preceding claims, wherein the radiation source (108) includes an incandescent lamp, a halogen lamp, an IR heating lamp, a tubular heating element or a light-emitting diode, LED.

5. An electric heating apparatus according to at least one of the preceding claims, wherein the reflector (110, 120, 128) includes a plurality of reflector elements separated from each other.

6. An electric heating apparatus according to at least one of the preceding claims, wherein the reflector (110, 120, 128) is manufactured in one piece as a rotationally symmetrical hollow body.

7. An electric heating apparatus according to at least one of the preceding claims, further comprising a holder (124) for holding the receptacle in a defined position with respect to the radiation source.

8. An electric heating apparatus according to at least one of the preceding claims, further comprising a sensor device for detecting the placed receptacle.

9. An electric heating apparatus according to at least one of the preceding claims, wherein the reflector (110, 120, 128) is made of metal or a metallized plastic material or glass.

10. An electric heating apparatus according to at least one of the preceding claims, further comprising a mechanical or electronic control means for controlling the duration and/or intensity of the energy supply by the radiation source.

11. An electric heating apparatus according to at least one of the preceding claims, wherein the radiation source (108) is substantially point-shaped and is arranged in a first focal point (112) of the reflector (110, 120, 128), and wherein the receptacle containing the substance to be heated in operation is provided in a second focal point (114) of the reflector.

12. An electric heating apparatus according to claim 11, wherein the reflector (110, 120, 128) has a rotation-ellipsoidal cross-section.

13. An electric heating apparatus according to at least one of claims 1 to 10, wherein the radiation source (108) is made to be substantially annular in shape.

14. An electric heating apparatus according to at least one of the preceding claims, wherein the reflector has a rotation-paraboloid cross-section arranged with respect to the radiation source such that the electromagnetic radiation is focused toward an area outside the casing.

## Revendications

1. Appareil de chauffage électrique avec un boîtier (106), dans lequel peut être reçu au moins en partie un récipient (102) avec une substance (104) à chauffer, au moins une source de rayonnement (108), destinée à émettre un rayonnement électromagnétique, étant agencée dans le boîtier (106), et l'appareil de chauffage (100) comportant, en outre, au moins un réflecteur (110, 120, 128), lequel est agencé de telle sorte qu'il dirige le rayonnement électromagnétique émis sur la substance à chauffer, le réflecteur (110, 120, 128) formant une cavité, qui peut recevoir au moins en partie le récipient (102) à chauffer, et la source de rayonnement étant agencée par rapport au réflecteur de telle sorte qu'une majeure partie du rayonnement électromagnétique qui n'atteint pas directement le récipient, est dirigée par le réflecteur sur le récipient, **caractérisé en ce que** le réflecteur est arrangé de telle sorte que le rayonnement électromagnétique est focalisé sur une zone délimitée de la substance à chauffer.

2. Appareil de chauffage électrique selon la revendication 1, dans lequel la source de rayonnement (108) se situe à l'intérieur de la cavité.

3. Appareil de chauffage électrique selon la revendication 1 ou 2, dans lequel le rayonnement électromagnétique contient un rayonnement infrarouge.

4. Appareil de chauffage électrique selon au moins l'une des revendications précédentes, dans lequel la source de rayonnement (108) comporte une lampe à incandescence, une lampe à halogène, une lampe thermique à infrarouge, un corps de chauffe tubulaire ou une diode émettant de la lumière, une diode électroluminescente.

5. Appareil de chauffage électrique selon au moins l'une des revendications précédentes, dans lequel le réflecteur (110, 120, 128) comporte une pluralité d'éléments réflecteurs séparés les uns des autres.

6. Appareil de chauffage électrique selon au moins l'une des revendications précédentes, dans lequel le réflecteur (110, 120, 128) est réalisé d'un seul tenant sous forme de corps creux à symétrie de révolution.

7. Appareil de chauffage électrique selon au moins l'une des revendications précédentes, comportant en outre un support (124) pour supporter le récipient dans une position définie par rapport à la source de rayonnement.

8. Appareil de chauffage électrique selon au moins l'une des revendications précédentes, comportant en outre un dispositif à capteur, destiné à détecter le récipient introduit.

9. Appareil de chauffage électrique selon au moins l'une des revendications précédentes, dans lequel le réflecteur (110, 120, 128) est réalisé en métal ou dans une matière plastique métallisée ou en verre.

10. Appareil de chauffage électrique selon au moins l'une des revendications précédentes, comprenant en outre un dispositif de commande mécanique ou électronique, destiné à commander la durée et/ou l'intensité de l'apport d'énergie par la source de rayonnement.

11. Appareil de chauffage électrique selon au moins l'une des revendications précédentes, dans lequel la source de rayonnement (108) est réalisée sensiblement en forme de point et est agencée dans un premier foyer (112) du réflecteur (110, 120, 128), et dans lequel le récipient avec la substance à chauffer se situe, en fonctionnement, dans un deuxième foyer (114) du réflecteur.

12. Appareil de chauffage électrique selon la revendication 11, dans lequel le réflecteur (110, 120, 128) a une section en ellipsoïde de révolution.

13. Appareil de chauffage électrique selon au moins l'une des revendications 1 à 10, dans lequel la source de rayonnement (108) est réalisée sensiblement en forme d'anneau.

14. Appareil de chauffage électrique selon au moins l'une des revendications précédentes, dans lequel le réflecteur a une section en paraboloïde de révolution, qui est agencée par rapport à la source de rayonnement de telle sorte que le rayonnement électromagnétique est focalisé sur une zone à l'extérieur du boîtier.
